# EUROPÄISCHE PATENTSCHRIFT

(11) **EP 2 905 459 B1**
(45) Veröffentlichungstag und Bekanntmachung des Hinweises auf die Patenterteilung: **20.09.2017**
(21) Anmeldenummer: 15000361.4
(22) Anmeldetag: 07.02.2015
(51) Int. Cl.: F02M 51/06, F02M 63/00, F02M 21/02

(54) **Elektromagnetisches Kraftstoffventil**
Electromagnetic fuel valve
Soupape de carburant électromagnétique

(30) Priorität: 11.02.2014 DE 102014001803
(43) Veröffentlichungstag der Anmeldung: 12.08.2015
(73) Patentinhaber: Andreas Stihl AG & Co. KG, 71336 Waiblingen (DE)
(72) Erfinder: Ramler, Jens, 71332 Waiblingen (DE); Mayer, Felix, 71332 Waiblingen (DE); Layher, Wolfgang, 74354 Besigheim (DE); Maier, George, 71394 Kernen (DE); Nonaka, Takumi, Iwategung, Iwateken (JP); Oka, Hiroyuki, Iwategung, Iwateken (JP); Watanabe, Hediki, Hachimantashi, Iwateken (JP)
(74) Vertreter: Wasmuth, Rolf

(56) Entgegenhaltungen:
- EP-A1- 0 207 261
- EP-A2- 2 757 246
- GB-A- 2 058 466
- US-A1- 2002 003 176
- US-A1- 2002 030 123
- US-A1- 2003 197 143
- US-B1- 6 364 222
- US-B1- 7 748 683

## Beschreibung

Die Erfindung betrifft ein elektromagnetisches Kraftstoffventil mit einem Ventilraum, dem ein Ventilglied und ein Ventilsitz zugeordnet sind.

Derartige elektromagnetische Kraftstoffventile sind aus der US 7,748,683 B1, US 2002/0003176 A1, US 2002/0030123 A1 oder US 6,364,222 B1 bekannt. Der Ventilraum ist von einem elektromagnetischen Antrieb begrenzt, der ein im Ventilraum liegende Ventilglied bewegt. Der Antrieb besteht aus einem Aufnahmegehäuse, in dem ein Spulenträger mit einer elektrischen Spule aufgenommen ist. In eine zentrale Öffnung des Spulenträgers wird ein Magnetkern eingeschoben, der somit in der Spule liegt. Mit einem Endabschnitt liegt der Magnetkern dem Ventilglied gegenüber, wobei das Aufnahmegehäuse und der Magnetkern Teil eines magnetischen Kreises des Antriebs sind. Zur Abdichtung des Aufnahmegehäuses gegenüber dem Ventilraum ist zwischen dem Endabschnitt des Magnetkerns und dem Aufnahmegehäuse ein Dichtelement in Form eines O-Rings oder anderer geeigneter Form angeordnet.

Die Abdichtung des Innenraums des Aufnahmegehäuses mit der elektrischen Spule ist notwendig, um die elektrische Seite des elektromagnetischen Antriebs von der Flüssigkeitsseite sicher zu trennen. Dringt Kraftstoff in das Aufnahmegehäuse ein, kann dies zu Störungen im elektromagnetischen Antrieb bis hin zum Ausfall des Antriebs führen.

Der Erfindung liegt die Aufgabe zugrunde, ein elektromagnetisches Kraftstoffventil der gattungsgemäßen Art derart weiterzubilden, dass eine einfache, wirkungsvolle Abdichtung des Aufnahmegehäuses gegenüber dem kraftstoffführenden Ventilraum gewährleistet ist.

Die Aufgabe wird erfindungsgemäß nach den Merkmalen des Anspruchs 1 gelöst.

Der Kerngedanke der Erfindung liegt darin, das vorgesehene Dichtelement an dem Spulenträger anzuformen und durch den Endabschnitt des eingeschobenen Magnetkerns derartig aufzuweiten, dass das Material des Dichtelementes radial gegen den Rand eines Dichtendes des Außengehäuses verpresst wird und den Ventilraum gegen den Innenraum des Aufnahmegehäuses verlässlich abdichtet.

Der in das an einem axialen Ende des Spulenträgers angeformte Dichtelement eindringende Magnetkern ist durch diese Gestaltung auch gegen den Spulenträger selbst abgedichtet.

Um ein sicheres Aufweiten des Dichtelementes ohne mechanische Beschädigung zu gewährleisten, ist vorgesehen, den dem Dichtelement zugewandten Endabschnitt des Magnetkerns zu seinem freien Ende hin abzurunden und/oder verjüngt auszubilden.

Das Dichtelement ist - zweckmäßig einteilig - an einem axialen Ende des Spulenträgers angeformt. Das Dichtelement besteht somit aus dem gleichen Material wie der Spulenträger selbst, wobei zweckmäßig ein verformbarer Kunststoff verwendet wird, der gute Dichteigenschaften aufweist und insbesondere auch gegen Kraftstoff beständig ist.

Das dem Ventilraum zugewandte offene Dichtende des Aufnahmegehäuses weist einen inneren Ringabsatz auf, der das offene Dichtende begrenzt. Das Dichtelement ist derart ausgebildet, dass es auf dem Ringabsatz aufsitzt. Der Ringabsatz zeigt eine Innenwand, die eine Öffnung in dem offenen Dichtende des Aufnahmegehäuses begrenzt, wobei die Öffnung etwa koaxial zur Wandung des Aufnahmegehäuses liegt. Wird der Magnetkern in das Dichtelement eingeschoben, so liegt das Dichtelement zwischen dem Endabschnitt des Magnetkerns und der Innenwand des Ringabsatzes verpresst.

Vorteilhaft ist vorgesehen, dass der Ringabsatz eine dem Spulenträger zugewandt liegende, innere Schulter aufweist. Die innere Schulter zeigt eine Schulterfläche, die mit der Innenwand des Aufnahmegehäuses einen Winkel größer 90° einschließt. Zweckmäßig wird der Winkel mit etwa 145° bis etwa 150° ausgebildet.

Der Ringabsatz kann als Anschlag für die Einschubtiefe des Spulenträgers in das Aufnahmegehäuse vorgesehen sein.

Bevor der Endabschnitt des Magnetkerns in das Dichtelement eindringt, hat das unverformte Dichtelement einen freien Innendurchmesser, der geringer ist als der Außendurchmesser des Endabschnittes des Magnetkerns. In zweckmäßiger Ausgestaltung ist der Innendurchmesser des unverformten Dichtelementes etwa 1 % bis 12% kleiner als der Durchmesser des Endabschnittes des Magnetkerns. Vorteilhaft ist der Innendurchmesser des unverformten Dichtelementes etwa 2% bis 6% kleiner als der Außendurchmesser des Endabschnittes des Magnetkerns.

Nach dem erfindungsgemäßen Verfahren zur Abdichtung eines Innenraums eines Aufnahmegehäuses eines elektromagnetischen Antriebs eines Kraftstoffventils gegen einen Ventilraum ist vorgesehen, zunächst in den Innenraum des Aufnahmegehäuses den Spulenträger mit der elektrischen Spule einzuschieben. In die zentrale Öffnung des Spulenträgers wird dann der vorteilhaft zylindrische Magnetkern eingeschoben, wobei ein Endabschnitt des Magnetkerns in ein Dichtelement eindringt, welches an dem dem Ventilraum zugewandten Ende des Spulenträgers vorgesehen ist. Das Dichtelement verschließt das dem Ventilraum zugewandte offene Dichtende des Aufnahmegehäuses und baut seine Dichtwirkung dadurch auf, dass der Magnetkern in das Dichtelement eingeschoben wird, wobei der in das Dichtelement eintauchende Endabschnitt des Magnetkerns das Material des Dichtelementes radial gegen den Rand des Aufnahmegehäuses verpresst, so dass der Innenraum des Aufnahmegehäuses gegen den Ventilraum abgedichtet ist. Durch dieses Verpressen des Dichtelementes wird zugleich erreicht, dass der Spulenträger gegen den Magnetkern sicher abgedichtet ist. Erreicht wird dies dadurch, dass das Material des Dichtelementes beim Einpressen des Magnetkerns in den Spulenträger im Wesentlichen radial verdrängt wird und den Spalt zwischen dem Magnetkern und dem Ringabsatz des Aufnahmegehäuses unter Druck füllt.

Um einen ausreichenden Pressdruck aufzubauen ist vorgesehen, dass der Innendurchmesser des Dichtelementes um einen Betrag von etwa 1 % bis 12% aufgeweitet wird, insbesondere um einen Betrag von etwa 2% bis 6% aufgeweitet wird.

Ist der Magnetkern in das Dichtelement eingeschoben, wird das Aufnahmegehäuse mit dem Spulenträger, der Spule und dem eingeschobenen Magnetkern mit Harz vergossen.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: einen schematischen Schnitt durch ein elektromagnetisches Kraftstoffventil in einer ersten Ausführungsform,
- Fig. 2: in schematischer Darstellung das Einschieben eines Magnetkerns in einen Spulenträger,
- Fig. 3: in vergrößerter schematischer Darstellung den in eine Dichtung am Spulenträger eindringenden Endabschnitt des Magnetkerns gemäß Einzelheit III in Fig. 2,
- Fig. 4: in vergrößerter Darstellung die Abdichtung zwischen einem Aufnahmegehäuse des Spulenträgers und dem Dichtelement gemäß Einzelheit IV in Fig. 2,
- Fig. 5: einen schematischen Schnitt durch ein weiteres Ausführungsbeispiel eines elektromagnetischen Kraftstoffventils.

Das in den Figuren dargestellte elektromagnetische Kraftstoffventil besteht aus einem elektromagnetischen Antrieb 1, der ein einem Ventilsitz 26 zugeordnetes Ventilglied 2 schaltet.

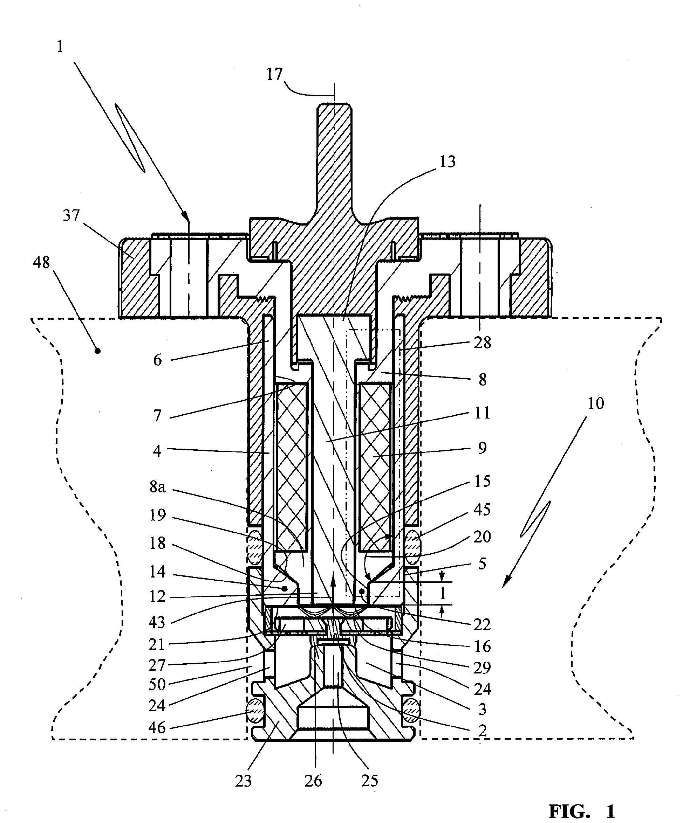

Der elektromagnetische Antrieb 1 besteht im Wesentlichen aus einem vorzugsweise zylindrischen Aufnahmegehäuse 4, welches in Form einer zylindrischen Buchse ausgebildet sein kann. Das Aufnahmegehäuse 4 ist sowohl an seinem einem Ventilraum 3 zugewandten Dichtende 5 als auch an dem dem Ventilraum 3 abgewandten Montageende 6 offen. In dem Innenraum 7 des Aufnahmegehäuses 4 ist ein Spulenträger 8 aufgenommen, wobei der Spulenträger 8 den Innenraum 7 im Wesentlichen füllt. Auf dem Spulenträger 8 ist eine elektrische Spule 9 gehalten, die in nicht näher dargestellter Weise zur Betätigung des elektromagnetischen Kraftstoffventils 10 bestromt wird. In den Spulenträger 8 ist ein Magnetkern 11 eingeschoben, wobei der dem Ventilraum zugewandte Endabschnitt 12 des Magnetkerns 11 in dem offenen Dichtende 5 des Aufnahmegehäuses 4 liegt. An seinem Anschlussende 13 verschließt der Magnetkern 11 im Wesentlichen das offene Montageende 6 des Aufnahmegehäuses 4, wobei Durchführungen für die elektrischen Anschlüsse der Spule 9 zwischen dem Aufnahmegehäuse 4 und dem Anschlussende 13 des Magnetkerns 11 ausgebildet sind, wie Fig. 1 zeigt.

Das dem Ventilraum 3 zugewandte offene Dichtende 5 des Aufnahmegehäuses 4 weist einen Ringabsatz 14 auf, der das offene Dichtende 5 begrenzt. Der Ringabsatz 14 ist mit einer Innenwand 15 ausgebildet, die etwa koaxial zur Wandung des Aufnahmegehäuses 4 liegt. Die Innenwand 15 begrenzt eine Öffnung 16 im offenen Dichtende 5, wobei die Öffnung 16 koaxial zu einer Längsmittelachse 17 des Aufnahmegehäuses 4 bzw. des elektromagnetischen Antriebs 1 liegt.

Der Ringabsatz 14 weist ferner eine dem Innenraum 7 bzw. dem Spulenträger 8 zugewandt liegende, innere Schulter 18 auf, deren Schulterfläche 19 unter einem Winkel 20 zur Wand des Aufnahmegehäuses 4 liegt. Die Schulterfläche 19 bildet eine kegelige Ringfläche.

Der Winkel 20 der Schulterfläche 19 ist regelmäßig größer als 90° ausgebildet; im gezeigten Ausführungsbeispiel beträgt der Winkel 20 etwa 145° bis 150°.

Der Ringabsatz 14 kann als Anschlag für die Einschubtiefe des Spulenträgers 8 in das Aufnahmegehäuse 4 ausgebildet sein.

Die dem Innenraum 7 des Aufnahmegehäuses 4 abgewandte Stirnseite 21 des Ringabsatzes 14 bildet zugleich die äußere, dem Ventilraum 3 zugewandte Stirnseite des Aufnahmegehäuses 4. Die Stirnseite 21 begrenzt den Ventilraum 3.

Der dem Ventilraum 3 zugewandte Endabschnitt 12 des Magnetkerns 11 liegt abgedichtet in der Öffnung 16. Hierzu ist ein Dichtelement 22 vorgesehen, welches zwischen dem Endabschnitt 12 des Magnetkerns 11 und der Innenwand 15 des Ringabsatzes 14 verpresst liegt. Dadurch ist der elektromagnetische Antrieb 1 gegen den Ventilraum 3 vollständig abgedichtet, so dass ein Eintreten von Flüssigkeit in den Innenraum 7 des Aufnahmegehäuses 4 sicher verhindert ist.

Im Ausführungsbeispiel nach Fig. 1 ist der Ventilraum 3 in einem vorzugsweise zylindrisch ausgebildeten Ventilgehäuse 23 ausgebildet, das dichtend auf das Aufnahmegehäuse 4 aufgeschoben ist. Der Ventilraum 3 steht über Zuflüsse 24 mit einem kraftstoff zuführenden Raum 50 in Verbindung; im gezeigten Ausführungsbeispiel sind die Zuflüsse 24 als radiale Bohrungen in der Zylinderwand des Ventilgehäuses 23 vorgesehen.

Der ringförmig ausgebildete Raum 50 ist in einem Gehäuse 48 ausgebildet, in dem das Kraftstoffventil 10 in einer Aufnahmebohrung eingeschoben ist. Über Dichtungen 45 und 46, vorzugsweise O-Ringe, ist der Raum 50 gegen das Kraftstoffventil abgedichtet. Die Zuflüsse 24 verbinden den kraftstoffgefüllten Raum 50 mit dem Ventilraum 3.

Der Ventilraum 3 weist ferner einen zentralen Abfluss 25 auf, der im gezeigten Ausführungsbeispiel auf der Längsmittelachse 17 des elektromagnetischen Antriebs liegt. Der Abfluss 25 ist als domartige Erhebung im Ventilraum 3 vorgesehen; das freie Domende bildet einen Ventilsitz 26, dem das Ventilglied 2 zugeordnet ist. Das Ventilglied 2 ist im Ventilraum 3 über eine Federplatte 27, eine Federmembran oder dgl. zum Ventilsitz 26 ausgerichtet gehalten, wobei in der gezeigten Ruhestellung des Kraftstoffventils 10 das Ventilglied 2 unter Federkraft dichtend auf dem Ventilsitz 26 gehalten ist.

Die Federplatte 27 weist Durchbrüche auf, so dass das Ventilglied 2 vollständig von der im Ventilraum 3 befindlichen Flüssigkeit umgeben ist.

Das Aufnahmegehäuse 4 und der Magnetkern 11 bestehen aus einem magnetisierbaren Material und sind Teil eines magnetischen Kreises 28. Wird die Spule 9 bestromt, baut sich ein magnetisches Feld 29 auf. Durch die Kraft des magnetischen Feldes 29 wird das dem Endabschnitt 12 des Magnetkerns 11 gegenüberliegende Ventilglied 2 magnetisch angezogen und hebt in Pfeilrichtung 43 vom Ventilsitz 26 ab. Die im Ventilraum 3 befindliche Flüssigkeit, insbesondere Kraftstoff, kann über den Abfluss 25 abfließen. Wird der Strom abgeschaltet, bricht das magnetische Feld 29 zusammen, und das aus magnetischem Material bestehende Ventilglied 2 wird unter Federwirkung auf den Ventilsitz 26 zurückgestellt. Der Abfluss 25 ist verschlossen.

Das Dichtelement 22 ist derart ausgebildet, dass der im Dichtelement liegende Endabschnitt 12 des Magnetkerns 11 das Dichtelement 22 aufweitet und das Material des Dichtelementes 22 radial gegen die Innenwand 15 der Öffnung 16 des Außengehäuses 4 verpresst. Dadurch wird eine gute Abdichtung des Ventilraums 3 gegen den Innenraum 7 des Aufnahmegehäuses 4 erzielt.

Das Dichtelement 22 wirkt nicht nur zwischen dem Aufnahmegehäuse 4 und dem Spulenträger 8; zugleich dichtet das Dichtelement 22 den Magnetkern 11 gegen den Spulenträger 8 ab, so dass ein Eindringen von Flüssigkeit aus dem Ventilraum 3 in den Innenraum 7 des Aufnahmegehäuses 4 sicher verhindert ist.

Im gezeigten Ausführungsbeispiel ist das Dichtelement 22 an einem axialen Ende 8a des Spulenträgers 8 vorgesehen; in besonderer Ausgestaltung ist das Dichtelement 22 einteilig an dem axialen Ende 8a des Spulenträgers 8 angeformt. Das Dichtelement 22 besteht dabei aus einem verformbaren Kunststoff, der sich unter Druck verlagert oder "fließt", derart, dass sich das Material verlagert. Dadurch wird das Dichtelement 22 in der Öffnung 16 des offenen Dichtendes 5 des Aufnahmegehäuses 4 verpresst; dadurch kann eine hohe Dichtwirkung über eine axiale Dichtlänge 1 erzielt werden.

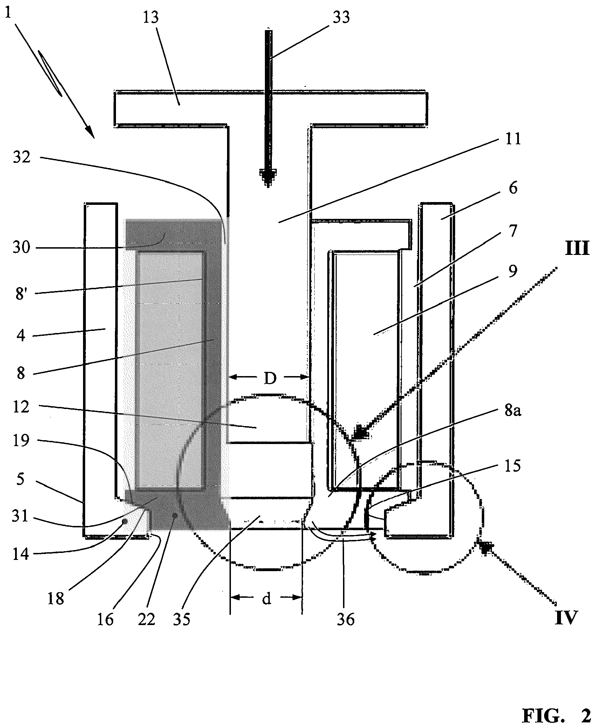

Anhand der schematischen Darstellungen der Figuren 2 bis 4 soll das Prinzip des verpressten Dichtelementes 22 erläutert werden. Gleiche Teile sind mit gleichen Bezugszeichen wie in Fig. 1 versehen.

In den Innenraum 7 eines Aufnahmegehäuses 4 ist ein Spulenträger 8 eingesetzt, wobei der Spulenträger einen Aufnahmeabschnitt 8' für die Spule 9 aufweist. Der Aufnahmeabschnitt 8' ist durch Stirnwände 30 und 31 begrenzt.

An dem einen Ende 8a des Spulenträgers 8 ist das Dichtelement 22 angeformt, wobei das Dichtelement 22 Teil der Stirnwand 31 des Spulenträgers 8 sein kann.

Wie Fig. 2 - übertrieben dargestellt - zeigt, hat das Dichtelement 22 einen Innendurchmesser d, der kleiner ist als der Außendurchmesser D des zylindrischen Magnetkerns 11. Im Ausführungsbeispiel ist der Innendurchmesser d des unverformten Dichtelementes 22 konstruktiv etwa 1 % bis 12% kleiner als der Außendurchmesser D des Endabschnittes 12 des Magnetkerns 11. Vorteilhaft ist der Innendurchmesser d des unverformten Dichtelementes 22 etwa 2% bis 6% kleiner als der Außendurchmesser D des Endabschnittes 12 des Magnetkerns 11.

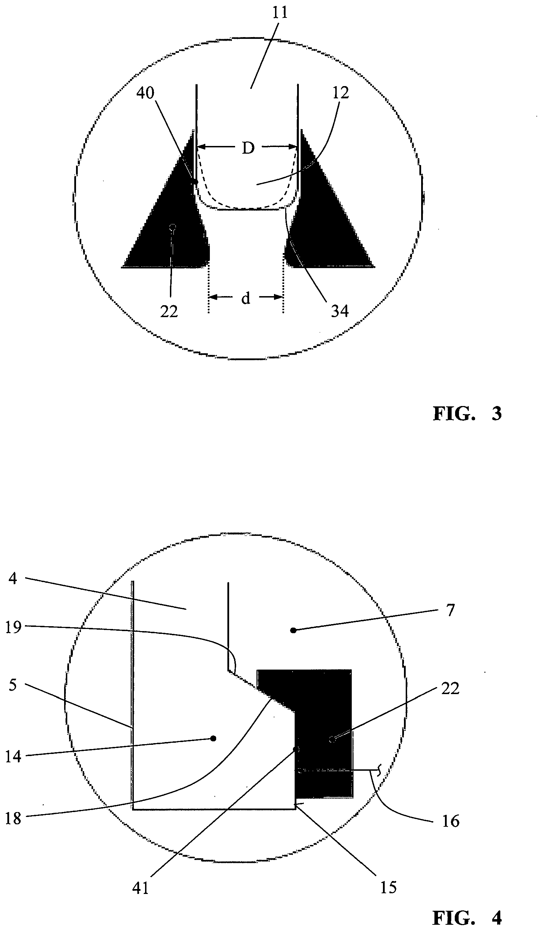

Wie Fig. 2 ferner zeigt, liegt das Dichtelement 22 am äußeren Rand der Stirnwand 31 einerseits auf der Schulter 18 auf und liegt andererseits innerhalb der Öffnung 16 des offenen Dichtendes 5 des Aufnahmegehäuses 4. Wird nun der Endabschnitt 12 des Magnetkerns 11 in Pfeilrichtung 33 in die zentrale Aufnahme 32 des Spulenträgers 8 eingeschoben, dringt der Endabschnitt 12 des Magnetkerns 11 in das Dichtelement 22 ein und weitet dieses auf. Um ein Abschälen des aus verformbarem Kunststoff bestehenden Dichtelementes 22 zu vermeiden, ist vorgesehen, den in das Dichtelement 22 einzuschiebenden Endabschnitt 12 mit gerundetem Kopf 34 (Fig. 3) auszubilden. Vorzugsweise ist der Endabschnitt 12 des Magnetkerns 11 zu seinem freien Ende hin verjüngt ausgebildet, wie strichliert angedeutet ist (Fig. 3).

Mit dem Einschieben des Endabschnittes 12 des Magnetkerns 11 in die mit geringerem Durchmesser d ausgebildete Zentralöffnung 35 des Dichtelementes 22 wird das Material des Dichtelementes 22 radial nach außen verdrängt, wobei sich das Material - wie mit den Pfeilen 36 angedeutet - sich radial nach außen verlagert, insbesondere "fließend" verlagert und sich dicht an die Innenwand 15 des Ringabsatzes 14 anlegt, also die Öffnung 16 im Dichtende 5 abdichtet.

Ist der Endabschnitt 12 des Magnetkerns 11 vollständig in die Dichtung eingeschoben, liegt die freie Stirnseite des Endabschnittes 12 des Magnetkerns 11 etwa in einer Ebene mit der Stirnseite 21 des Aufnahmegehäuses 4; zweckmäßig hat die Stirnseite des Endabschnittes 12 des Magnetkerns 11 einen geringen Abstand zur Stirnseite 21 des Aufnahmegehäuses 4.

Durch das Verlagern des Materials des Dichtelementes gemäß Pfeilrichtung 36 in Fig. 2 wird auch eine flüssigkeitsdichte Abdichtung zwischen dem Dichtelement 22 selbst und dem offenen Dichtende 5 des Aufnahmegehäuses 4 erzielt. Das Material des Dichtelementes 22 liegt verpresst zwischen dem Endabschnitt 12 des Magnetkerns 11 und dem Ringabsatz 14; wie Fig. 1 zeigt, taucht der Endabschnitt 12 des Magnetkerns 11 in den Ringabsatz 14 ein, so dass sich eine axiale Dichtlänge 1 ergibt, die etwa der axialen Höhe der Innenwand 15 des Ringabsatzes 14 entspricht.

Ist der Endabschnitt 12 des Magnetkerns 11 in das Dichtelement 22 vollständig eingeschoben, ist der Außenumfang des Endabschnittes 12 des Magnetkerns 11 als erste Dichtfläche 40 über den Umfang des Endabschnittes 12 des Magnetkerns 11 abgedichtet; durch das Verpressen und Verlagern des Materials des Dichtelementes 22 ergibt sich auch eine Abdichtung zwischen dem Dichtelement 22 und der Innenwand 15 des Ringabsatzes 14, die eine zweite Dichtfläche 41 bildet.

Ist der Magnetkern 11 über das offene Montageende 6 des Aufnahmegehäuses 4 vollständig in das Aufnahmegehäuse 4 eingeschoben und montiert, kann der elektromagnetische Antrieb 1 betriebsbereit fertiggestellt werden und das Aufnahmegehäuse 4 mit dem Spulenträger 8, der Spule 9 und dem eingeschobenen Magnetkern 11 mit Harz vergossen werden. Die Vergussmasse 37 (Fig. 1) gewährleistet einen flüssigkeitsdichten Abschluss des elektromagnetischen Antriebs 1 auch auf Seiten des Montageendes 6 des Aufnahmegehäuses 4 bzw. des Anschlussendes 13 des insbesondere zylindrisch ausgeführten Magnetkerns 11; die Vergussmasse 37 kann zugleich als gehäusewandbildendes Material genutzt werden, wie Fig. 1 zeigt.

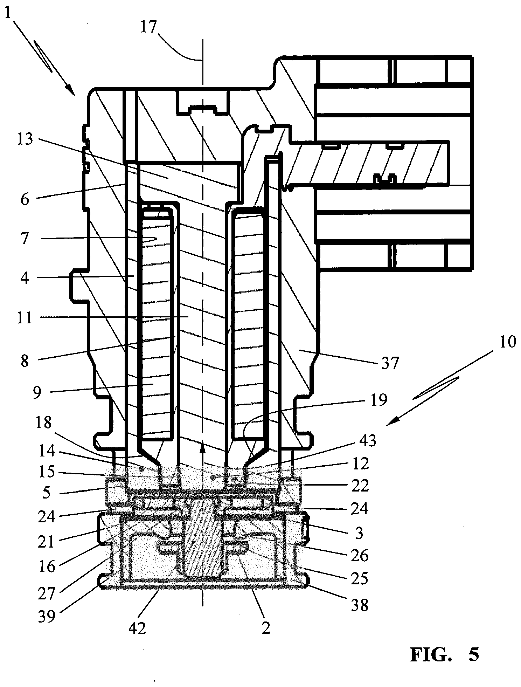

Das Ausführungsbeispiel nach Fig. 5 entspricht im Grundaufbau dem nach Fig. 1, weshalb für gleiche Teile gleiche Bezugszeichen verwendet sind.

Ist im Ausführungsbeispiel nach Fig. 1 der Ventilraum 3 auf das Dichtende 5 des Aufnahmegehäuses 4 dichtend aufgeschoben, so wird im Ausführungsbeispiel nach Fig. 5 eine zylindrische Verlängerung 38 ausgebildet, die das Dichtende 5 des Aufnahmegehäuses 4 überragt. In die zylindrische Verlängerung 38 wird ein Ventileinsatz 39 eingeschoben, an dem der Ventilsitz 26 ausgebildet ist. Das Ventilglied 2 liegt außerhalb des Ventilraums 3 und wird über die im Ventilraum 3 liegende Federplatte 27 und einen Montagezapfen 42 gehalten. Der Montagezapfen 42 durchragt den Abfluss 25, der konzentrisch zur Längsmittelachse 17 im Ventileinsatz 39 ausgebildet ist. Die Verlängerung 38 kann aus der gehäusebildenden Vergussmasse 37 gebildet sein.

Das in Fig. 5 gezeigte elektromagnetische Kraftstoffventil ist in stromlosem Zustand offen; wird die Spule 9 bestromt, wird der magnetische Montagezapfen 42 gegen die Kraft der Feder der Federplatte 27 angezogen, wodurch das Ventilglied 2 den Abfluss 25 verschließt. Wird der Strom abgeschaltet, fällt der Montagezapfen 42 ab und das Ventilglied 2 hebt vom Ventilsitz 26 ab; der Abfluss 25 ist offen.

## Patentansprüche

1. Elektromagnetisches Kraftstoffventil mit einem Ventilraum (3), mit einem Ventilglied (2) und einem dem Ventilglied (2) zugeordneten Ventilsitz (26), wobei der Ventilraum (3) von einem elektromagnetischen Antrieb (1) begrenzt ist, der das Ventilglied (2) relativ zum Ventilsitz (26) bewegt, und der Antrieb (1) ein Aufnahmegehäuse (4) aufweist, in dem ein Spulenträger (8) aufgenommen ist, auf dem eine elektrische Spule (9) gehalten ist, sowie mit einem in den Spulenträger (8) eingeschobenen Magnetkern (11), der mit einem Endabschnitt (12) dem Ventilglied (2) gegenüberliegt, wobei das Aufnahmegehäuse (4) und der Magnetkern (11) Teil eines magnetischen Kreises (28) sind, und an einem dem Ventilraum (3) zugewandten offenen Dichtende (5) des Aufnahmegehäuses (4) ein Dichtelement (22) zwischen dem Endabschnitt (12) des Magnetkerns (11) und dem Dichtende (5) des Aufnahmegehäuses (4) angeordnet ist,
**dadurch gekennzeichnet, dass** das Dichtelement (22) an einem axialen Ende (8a) des Spulenträgers (8) angeformt ist, wobei der in dem Dichtelement (22) liegende Endabschnitt (12) des Magnetkerns (11) das Dichtelement (22) am axialen Ende (8a) des Spulenträgers (8) aufweitet und das Material des Dichtelementes (22) radial gegen den Rand des Dichtendes (5) des Aufnahmegehäuses (4) verpresst und den Ventilraum (3) gegen den Innenraum (7) des Aufnahmegehäuses (4) abdichtet.

2. Kraftstoffventil nach Anspruch 1,
**dadurch gekennzeichnet, dass** das Dichtelement (22) den Magnetkern (11) gegen den Spulenträger (8) abdichtet.

3. Kraftstoffventil nach Anspruch 1,
**dadurch gekennzeichnet, dass** der in dem Dichtelement (22) liegende Endabschnitt (12) des Magnetkerns (11) zu seinem freien Ende verjüngt ausgebildet ist.

4. Kraftstoffventil nach Anspruch 1,
**dadurch gekennzeichnet, dass** das Dichtelement (22) einteilig an einem axialen Ende (8a) des Spulenträgers (8) angeformt ist.

5. Kraftstoffventil nach Anspruch 1,
**dadurch gekennzeichnet, dass** das Dichtelement (22) aus einem verformbaren Kunststoff besteht.

6. Kraftstoffventil nach Anspruch 1,
**dadurch gekennzeichnet, dass** das dem Ventilraum (3) zugewandte offene Dichtende (5) des Aufnahmegehäuses (4) einen inneren Ringabsatz (14) aufweist, der das offene Dichtende (5) begrenzt, und dass das Dichtelement (22) auf dem Ringabsatz (14) aufsitzt.

7. Kraftstoffventil nach Anspruch 6,
**dadurch gekennzeichnet, dass** der Ringabsatz (14) eine Innenwand (15) aufweist, die eine Öffnung (16) in dem offenen Dichtende (5) des Aufnahmegehäuses (4) begrenzt und etwa koaxial zur Wandung des Aufnahmegehäuses (4) liegt.

8. Kraftstoffventil nach Anspruch 7,
**dadurch gekennzeichnet, dass** das Dichtelement (22) zwischen dem Endabschnitt (12) des Magnetkerns (11) und der Innenwand (15) des Ringabsatzes (14) verpresst liegt.

9. Kraftstoffventil nach Anspruch 6,
**dadurch gekennzeichnet, dass** der Ringabsatz (14) eine dem Spulenträger (8) zugewandt liegende, innere Schulter (18) mit einer Schulterfläche (19) aufweist, und die Schulterfläche (19) mit der Innenwand (15) des Ringabsatzes (14) einen Winkel (20) größer 90° einschließt.

10. Kraftstoffventil nach Anspruch 6,
**dadurch gekennzeichnet, dass** der Ringabsatz (14) als Anschlag für die Einschubtiefe des Spulenträgers (8) in das Aufnahmegehäuse (4) ausgebildet ist.

11. Kraftstoffventil nach Anspruch 1,
**dadurch gekennzeichnet, dass** das unverformte Dichtelement (22) einen freien Innendurchmesser (d) aufweist, der geringer ist als der Außendurchmesser (D) des Endabschnittes (12) des Magnetkerns (11).

12. Kraftstoffventil nach Anspruch 11,
**dadurch gekennzeichnet, dass** der Innendurchmesser (d) des unverformten Dichtelementes (22) etwa 1% bis 12% kleiner ist als der Außendurchmesser (D) des Endabschnittes (12) des Magnetkerns (11).

13. Verfahren zur Abdichtung eines Innenraums (7) eines Aufnahmegehäuses (4) eines elektromagnetischen Antriebs (1) eines Kraftstoffventils (10) gegen einen Ventilraum (3), dem ein Ventilglied (2) und ein Ventilsitz (26) zugeordnet sind, wobei der Ventilraum (3) von dem elektromagnetischen Antrieb (1) begrenzt ist, und in dem Innenraum (7) des Aufnahmegehäuses (4) ein Spulenträger (8) aufgenommen ist, auf dem eine elektrische Spule (9) gehalten ist, wobei in den Spulenträger (8) ein Magnetkern (11) eingesetzt ist, und ein dem Ventilraum (3) zugewandtes Ende (8a) des Spulenträgers (8) ein Dichtelement (22) trägt, das an einem axialen Ende (8a) des Spulenträgers (8) angeformt ist und das dem Ventilraum (3) zugewandte offene Dichtende (5) des Außengehäuses (4) verschließt, und der Magnetkern (11) über das dem Ventilraum (3) abgewandte axiale Montageende (6) des Aufnahmegehäuses (4) in den Spulenträger (8) eingeschoben wird, wobei der in das an dem axialen Ende (8a) des Spulenträgers (8) angeformte Dichtelement (22) eintauchende Endabschnitt (12) des Magnetkerns (11) das Material des Dichtelementes (22) radial gegen den Rand des Dichtendes (5) des Aufnahmegehäuses (4) verpresst und dessen Innenraum (7) gegen den Ventilraum (3) abdichtet.

14. Verfahren nach Anspruch 13,
**dadurch gekennzeichnet, dass** das Material des Dichtelementes (22) beim Einpressen des Magnetkern (11) in den Spulenträger (8) verdrängt wird.

15. Verfahren nach Anspruch 13,
**dadurch gekennzeichnet, dass** der Innendurchmesser (d) des Dichtelementes (22) um einen Betrag von etwa 1% bis 12% aufgeweitet wird.

16. Verfahren nach Anspruch 13,
**dadurch gekennzeichnet, dass** das Aufnahmegehäuse (4) mit dem Spulenträger (8), der Spule (9) und dem eingeschobenen Magnetkern (11) nach dem Verpressen des Dichtelementes (22) mit Harz vergossen wird.

## Claims

1. Electromagnetic fuel valve having a valve chamber (3), having a valve member (2) and a valve seat (26) assigned to the valve member (2), wherein the valve chamber (3) is delimited by an electromagnetic drive (1), which moves the valve member (2) relative to the valve seat (26), and the drive (1) has a receiving housing (4), in which a coil carrier (8) is received, on which an electric coil (9) is held, and also having a magnet core (11) inserted into the coil carrier (8), the magnet core (11) lying with an end portion (12) opposite to the valve member (2), wherein the receiving housing (4) and the magnet core (11) are part of a magnetic circuit (28), and at an open sealing end (5) of the receiving housing (4) facing towards the valve chamber (3) a sealing element (22) is arranged between the end portion (12) of the magnet core (11) and the sealing end (5) of the receiving housing (4),
**characterised in that** the sealing element (22) is formed at an axial end (8a) of the coil carrier (8), wherein the end portion (12) of the magnet core (11) lying in the sealing element (22) widens the sealing element (22) at the axial end (8a) of the coil carrier (8) and presses the material of the sealing element (22) radially against the edge of the sealing end (5) of the receiving housing (4) and seals the valve chamber (3) against the interior space (7) of the receiving housing (4).

2. Fuel valve according to claim 1,
**characterised in that** the sealing element (22) seals the magnet core (11) against the coil carrier (8).

3. Fuel valve according to claim 1,
**characterised in that** the end portion (12), lying in the sealing element (22), of the magnet core (11) is configured to be tapered towards its free end.

4. Fuel valve according to claim 1,
**characterised in that** the sealing element (22) is formed integrally at an axial end (8a) of the coil carrier (8).

5. Fuel valve according to claim 1,
**characterised in that** the sealing element (22) is made of a deformable plastic.

6. Fuel valve according to claim 1,
**characterised in that** the open sealing end (5) of the receiving housing (4) facing towards the valve chamber (3) has an inner annular offset (14), which delimits the open sealing end (5), and the sealing element (22) is positioned on the annular offset (14).

7. Fuel valve according to claim 6,
**characterised in that** the annular offset (14) has an inner wall (15), which delimits an opening (16) in the open sealing end (5) of the receiving housing (4) and lies approximately coaxially to the wall of the receiving housing (4).

8. Fuel valve according to claim 7,
**characterised in that** the sealing element (22) lies pressed between the end portion (12) of the magnet core (11) and the inner wall (15) of the annular offset (14).

9. Fuel valve according to claim 6,
**characterised in that** the annular offset (14) has an inner shoulder (18) lying facing towards the coil carrier (8), having a shoulder surface (19), and the shoulder surface (19) encloses, with the inner wall (15) of the annular offset (14), an angle (20) of greater than 90°.

10. Fuel valve according to claim 6,
**characterised in that** the annular offset (14) is formed as a stop for the insertion depth of the coil carrier (8) into the receiving housing (4).

11. Fuel valve according to claim 1,
**characterised in that** the non-deformed sealing element (22) has a free inner diameter (d), which is smaller than the outer diameter (D) of the end portion (12) of the magnet core (11).

12. Fuel valve according to claim 11,
**characterised in that** the inner diameter (d) of the non-deformed sealing element (22) is approximately 1% to 12% smaller than the outer diameter (D) of the end portion (12) of the magnet core (11).

13. Method for sealing an interior space (7) of a receiving housing (4) of an electromagnetic drive (1) of a fuel valve (10) against a valve chamber (3), to which a valve member (2) and a valve seat (26) are assigned, wherein the valve chamber (3) is delimited by the electromagnetic drive (1), and a coil carrier (8) is received in the interior space (7) of the receiving housing (4), an electric coil (9) being held on the coil carrier (8), wherein a magnet core (11) is inserted into the coil carrier (8), and an end (8a) of the coil carrier (8) facing towards the valve chamber (3) carries a sealing element (22), which is formed at an axial end (8a) of the coil carrier (8) and closes the open sealing end (5) of the outer housing (4) facing towards the valve chamber (3), and the magnet core (11) is inserted via the axial assembly end (6), facing away from the valve chamber (3), of the receiving housing (4) into the coil carrier (8), wherein the end portion (12), of the magnet core (11), immersing into the sealing element (22) formed at the axial end (8a) of the coil carrier (8) presses the material of the sealing element (22) radially against the edge of the sealing end (5) of the receiving housing (4) and seals the interior space (7) thereof against the valve chamber (3).

14. Method according to claim 13,
**characterised in that** the material of the sealing element (22) is displaced during pressing of the magnet core (11) into the coil carrier (8).

15. Method according to claim 13,
**characterised in that** the inner diameter (d) of the sealing element (22) is widened by approximately 1% to 12%.

16. Method according to claim 13,
**characterised in that** the receiving housing (4) is cast with resin with the coil carrier (8), the coil (9) and the inserted magnet core (11) after pressing of the sealing element (22).

## Revendications

1. Soupape de carburant électromagnétique avec un espace de soupape (3), un organe de soupape (2) et un siège de soupape (26) associé à l'organe de soupape (2), l'espace de soupape (3) étant limité par un entraînement électromagnétique (1) qui déplace l'organe de soupape (2) par rapport au siège de soupape (26), et l'entraînement (1) comportant un logement (4) dans lequel est logé un support de bobine (8) sur lequel est retenue une bobine électrique (9), et avec un noyau d'aimant (11), glissé dans le support de bobine (8), qui se trouve avec une section d'extrémité (12) en face de l'organe de soupape (2), le logement (4) et le noyau d'aimant (11) faisant partie d'un circuit magnétique (28), et à une extrémité d'étanchéité ouverte (5) du logement (4) tournée vers l'espace de soupape (3) un élément d'étanchéité (22) étant disposé entre la section d'extrémité (12) du noyau d'aimant (11) et l'extrémité d'étanchéité (5) du logement (4),
**caractérisée en ce que** l'élément d'étanchéité (22) est rapporté sur une extrémité axiale (8a) du support de bobine (8), la section d'extrémité (12) du noyau d'aimant (11) située dans l'élément d'étanchéité (22) élargissant ledit élément d'étanchéité (22) au niveau de l'extrémité axiale (8a) du support de bobine (8) et comprimant le matériau de l'élément d'étanchéité (22) radialement contre le bord de l'extrémité d'étanchéité (5) du logement (4), et réalisant l'étanchéité entre l'espace de soupape (3) et l'espace intérieur (7) du logement (4).

2. Soupape de carburant selon la revendication 1,
**caractérisée en ce que** l'élément d'étanchéité (22) réalise l'étanchéité entre le noyau d'aimant (11) et le support de bobine (8).

3. Soupape de carburant selon la revendication 1,
**caractérisée en ce que** la section d'extrémité (12) du noyau d'aimant (11) située dans l'élément d'étanchéité (22) va en rétrécissant, à son extrémité libre.

4. Soupape de carburant selon la revendication 1,
**caractérisée en ce que** l'élément d'étanchéité (22) est rapporté d'une seule pièce sur une extrémité axiale (8a) du support de bobine (8).

5. Soupape de carburant selon la revendication 1,
**caractérisée en ce que** l'élément d'étanchéité (22) se compose d'une matière plastique déformable.

6. Soupape de carburant selon la revendication 1,
**caractérisée en ce que** l'extrémité d'étanchéité ouverte (5) du logement (4) tournée vers l'espace de soupape (3) présente une saillie annulaire intérieure (14) qui limite l'extrémité d'étanchéité ouverte (5), et **en ce que** l'élément d'étanchéité (22) est posé sur la saillie annulaire (14).

7. Soupape de carburant selon la revendication 6,
**caractérisée en ce que** la saillie annulaire (14) présente une paroi intérieure (15) qui limite une ouverture (16) dans l'extrémité d'étanchéité ouverte (5) du logement (4) et qui est à peu près coaxiale par rapport à la paroi du logement (4).

8. Soupape de carburant selon la revendication 7,
**caractérisée en ce que** l'élément d'étanchéité (22) se trouve, comprimé, entre la section d'extrémité (12) du noyau d'aimant (11) et la paroi intérieure (15) de la saillie annulaire (14).

9. Soupape de carburant selon la revendication 6,
**caractérisée en ce que** la saillie annulaire (14) présente un épaulement intérieur (18), tourné vers le support de bobine (8), avec une surface d'épaulement (19), et la surface d'épaulement (19) définit avec la paroi intérieure (15) de la saillie annulaire (14) un angle (20) supérieur à 90°.

10. Soupape de carburant selon la revendication 6,
**caractérisée en ce que** la saillie annulaire (14) est conçue comme une butée pour la profondeur d'introduction du support de bobine (8) dans le logement (4).

11. Soupape de carburant selon la revendication 1,
**caractérisée en ce que** l'élément d'étanchéité (22) non déformé présente un diamètre intérieur libre (d) qui est plus petit que le diamètre extérieur (D) de la section d'extrémité (12) du noyau d'aimant (11).

12. Soupape de carburant selon la revendication 11,
**caractérisée en ce que** le diamètre intérieur (d) de l'élément d'étanchéité (22) non déformé est supérieur d'environ 1% à 12% au diamètre extérieur (D) de la section d'extrémité (12) du noyau d'aimant (11).

13. Procédé pour l'étanchéité entre un espace intérieur (7) d'un logement (4) d'un entraînement électromagnétique (1) d'une soupape de carburant (10), et un espace de soupape (3) auquel sont associés un organe de soupape (2) et un siège de soupape (26), selon lequel l'espace de soupape (3) est limité par l'entraînement électromagnétique (1) et dans l'espace intérieur (7) du logement (4) est logé un support de bobine (8) sur lequel est retenue une bobine électrique (9), un noyau d'aimant (11) est placé dans le support de bobine (8), et une extrémité (8a) du support de bobine (8) tournée vers l'espace de soupape (3) porte un élément d'étanchéité (22) qui est rapporté sur ladite extrémité axiale (8a) du support de bobine (8) et qui obture l'extrémité d'étanchéité ouverte (5) du logement (4) tournée vers l'espace de soupape (3), et le noyau d'aimant (11) est glissé dans le support de bobine (8) par l'extrémité de montage axiale (6) du logement (4) opposée à l'espace de soupape (3), la section d'extrémité (12) du noyau d'aimant (11) qui pénètre dans l'élément d'étanchéité (22) rapporté sur l'extrémité axiale (8a) du support de bobine (8) comprime le matériau de l'élément d'étanchéité (22) radialement contre le bord de l'extrémité d'étanchéité (5) du logement (4), et réalise l'étanchéité entre l'espace intérieur (7) de celle-ci et l'espace de soupape (3).

14. Procédé selon la revendication 13,
**caractérisé en ce que** le matériau de l'élément d'étanchéité (22) est comprimé lorsque le noyau d'aimant (11) est enfoncé dans le support de bobine (8).

15. Procédé selon la revendication 13,
**caractérisé en ce que** le diamètre intérieur (d) de l'élément d'étanchéité (22) est élargi d'une valeur d'environ 1% à 12%.

16. Procédé selon la revendication 13,
**caractérisé en ce que** le logement (4), après la compression de l'élément d'étanchéité (22), est scellé à l'aide de résine avec le support de bobine (8), la bobine (9) et le noyau d'aimant (11) introduit.
